# EUROPÄISCHE PATENTSCHRIFT

(11) **EP 1 958 493 B1**
(45) Veröffentlichungstag und Bekanntmachung des Hinweises auf die Patenterteilung: **30.12.2009**
(21) Anmeldenummer: 08002602.4
(22) Anmeldetag: 13.02.2008
(51) Int. Cl.: A01D 34/66, A01D 75/18

(54) **Mähmaschine**
Mowing machine
Faucheuse

(30) Priorität: 14.02.2007 DE 102007007242
(43) Veröffentlichungstag der Anmeldung: 20.08.2008
(73) Patentinhaber: Maschinenfabrik Bernard Krone GmbH, 48480 Spelle (DE)
(72) Erfinder: Krone, Bernard Dr.-Ing. E.h., 48480 Spelle (DE); Horstmann, Josef, Dr.-Ing., 49479 Ibbenbüren (DE); Afting, Andreas , Dipl.-Ing., 48488 Emsbüren (DE)

(56) Entgegenhaltungen:
- EP-A- 0 774 202
- DE-A1- 19 720 956
- US-B1- 6 675 563
- US-B1- 6 718 745

## Beschreibung

Die Erfindung betrifft eine Mähmaschine zum Ernten von halmförmigem Erntegut, insbesondere ein Scheibenmähwerk. Solche Scheibenmähmaschinen sind für sich in zahlreichen Ausführungsformen bekannt. Im Betrieb können sie beispielsweise im Front- oder Heckbereich an einem Schlepper oder dgl. Zug- und Antriebsmaschine angebaut sein. Neben einer Verwendung in der gezogenen Ausführungsform ist heute ein Einsatz an einer selbstfahrenden Arbeitsmaschine stark verbreitet.

Als Schneidorgane sind derartige Mähmaschinen mit Messertellern versehen, die auf einem Mähholm angebracht um eine etwa vertikale Achse mit hoher Drehzahl rotierend angetrieben sind, wobei zumindest zwei Schneidmesser durch die Fliehkraft radial nach außen stehen und so eine Schneidwirkung erzeugen. Beim Mäheinsatz derartiger Mähmaschinen ist es nicht auszuschließen, dass die Schneidorgane mit den nach außen stehenden Schneidmessern mit Steinen oder dgl. Hindernissen in Berührung kommen. Dabei wird das betroffene Schneidorgan schlagartig abgebremst, während die Mähmaschine von dem Schlepper oder dgl. Zug- und Antriebsmaschine weiter angetrieben wird, so dass sich dabei aufgrund der Masse des Schneidorgans und der hohen Drehgeschwindigkeit eine große kinetische Rotationsenergie auf den Antrieb des blockierten Schneidorgans entlädt. Die dadurch entstehenden Brüche an den aus Zahnrädern bestehenden Antriebsorganen führen zu großen Schäden, die nur durch aufwändige Reparaturen und damit verbundenen, hohen Kosten behoben werden können.

Die DE 197 20 956 A1 schlägt zur Lösung dieses Problems vor, die Verbindung zwischen den aus dem Mähholm herausragenden, in etwa vertikalen Antriebswellen und den als Messerteller ausgebildeten Schneidorganen mit einem die weitere Übertragung eines Antriebsdrehmomentes auf das Schneidorgan unterbrechenden Übertragungselement zu versehen. In einfachen Ausführungsformen können dies Spannhülsen oder dgl. Abscherstifte sein, die im Falle einer Überlast abscheren und somit keine weitere Übertragung eines Antriebsdrehmomentes zulassen. Diese konstruktiv einfachen Lösungen sind jedoch mit dem Mangel behaftet, dass durch Schwingungen oder ähnlichen Unregelmäßigkeiten im Antriebsdrehmoment die Gefahr einer schleichenden Zermürbung derartiger Abscherelemente eintreten kann, so dass dadurch eine gesicherte Übertragung des zum Mähvorgang erforderlichen Antriebsdrehmomentes nicht gewährleistet werden kann.

Aus der US 6,718,745 B1 ist eine gattungsgemäße Mähmaschine mit einer Überlastsicherung an den Schneidorganen offenbart ist, bei der zur Erzeugung einer formschlüssigen Verbindung zwischen einer Antriebswelle und einer Nabe des Schneidorgans eine Innenverzahnung an der das Schneidorgan tragenden Nabe vorgesehen ist, welche im Überlastfall abscheren kann, so dass dadurch die Übertragung von Antriebsleistung von der Antriebswelle auf das Schneidorgan unterbrochen wird. Zur Befestigung der das Schneidorgan tragenden Nabe auf der Antriebswelle ist eine Befestigungsschraube vorgesehen, wobei jedoch in der US 6,718,745 B1 vom Aufbau einer Vorspannkraft zwischen der das Schneidorgan tragenden Nabe und der Antriebswelle keine Rede ist.

Aufgabe der vorliegenden Erfindung ist es daher, eine Mähmaschine, insbesondere ein Scheibenmähwerk der vorstehend genannten Art bereitzustellen, welches zuverlässig gegen Gewaltbrüche an den Antriebselementen der Schneidorgane geschützt ist und bei dem aber gleichzeitig eine dauerhaft zuverlässige Übertragung des zum Mähbetrieb erforderlichen Antriebsdrehmomentes erreichbar ist.

Diese Aufgabe wird erfindungsgemäß durch die Merkmale des Anspruchs 1 gelöst. In den weiteren Ansprüchen schließen sich vorteilhafte Weiterbildungen der Erfindung an.

Gemäß der Erfindung wird eine Mähmaschine bereitgestellt, bei der eine Antriebswelle eines Antriebsorgans von auf einem Mähholm angebrachten, um eine in etwa vertikale Achse rotierenden Schneidorganen eine Überlastsicherung aufweist, welche von einer das Schneidorgan tragenden Nabe gebildet ist, wobei diese mit einem Abscherelement zur Erzeugung einer formschlüssigen Verbindung zwischen der Antriebswelle und der Nabe und mit einer Anordnung zur Herstellung einer reibschlüssigen Verbindung zwischen der Antriebswelle und der Nabe zusammenwirkend ausgebildet ist und wobei der Nabe eine als Vorspannelement ausgeführte Anordnung zugeordnet ist, welche derartig auf die das Schneidorgan tragende Nabe einwirkt, dass zwischen der Nabe und der Antriebswelle eine reibschlüssige Verbindung wirksam wird und dass das Vorspannelement zusammen mit der das Schneidorgan tragenden Nabe im Falle einer Überlast in eine Nichtbetriebsstellung überführbar ist, die sich oberhalb der Betriebstellung befindet. Die hier beschriebene Art einer Überlastsicherung stellt also ein Ansprechmoment bereit, das sich aus zwei Teilmomenten zusammensetzt. Ein erstes Teilmoment ergibt sich aus dem Abschermoment des Abscherelementes, während das zweite Teilmoment daraus resultiert, dass eine als Vorspannelement ausgeführte Anordnung eine Vorspannkraft auf die das Schneidorgan tragende Nabe bewirkt und somit ein Reibmoment zwischen der Nabe des Schneidorgans und der aus dem Mähholm hervorragenden Antriebswelle erzeugt. Dieses in seiner Größe durch die entsprechende Auswahl der Vorspannkraft einstellbare Reibmoment sorgt in vorteilhafter Weise dafür, dass Schwingungen oder dgl. Unregelmäßigkeiten im Antriebsmoment der jeweiligen Schneidorgane nicht auf das Abscherelement einwirken. Durch die vorteilhafte Aufteilung des Ansprechmomentes der Überlastsicherung in zwei Teilmomente wird es also ermöglicht, dass das erste, durch die Abscherung des Abscherelementes aufgebrachte Teilmoment lediglich für eine Absicherung der Schneidorgane gegen Gewaltbrüche oder dgl. Beanspruchungen, welche durch Steine oder ähnlichen Fremdkörpern in Schneidbereich der Schneidorgane entstehen können, auszulegen ist. Das zur üblichen Mäharbeit erforderliche Antriebsdrehmoment eines jeden Schneidorgans kann durch das zweite, durch Reibschluss aufgebrachte Teilmoment abgedeckt werden. Bei der konstruktiven Gestaltung der Übelastsicherung kann man sich somit vorteilhafterweise auf eine einfache und kostengünstige Ausführungsform des Abscherelementes beschränken.

Eine günstige Ausführungsform der Erfindung entsteht, wenn die Überlastsicherung von der das Schneidorgan tragenden Nabe gebildet ist, welche über ein Abscherelement mit der Antriebswelle formschlüssig verbunden ist und dass der Nabe eine als Vorspannelement ausgeführte Anordnung zur Herstellung einer reibschlüssigen Verbindung zwischen der Antriebswelle und der Nabe zugeordnet ist, wobei von dem oberhalb der Nabe angeordneten Vorspannelement eine Vorspannkraft aufgebracht wird, die ein Reibmoment zwischen der Antriebswelle und der Nabe erzeugt. Ein weiterer vorteilhafter Aspekt der Erfindung ergibt sich dadurch, dass das Vorspannelement und die das Schneidorgan tragende Nabe in der Betriebsstellung des Schneidorgans verdrehfest miteinander verbunden sind. Im Falle einer Überlast, also für den Fall, dass das Abscherelement beispielsweise bedingt durch einen Aufprall des Schneidorgans auf einen Stein abschert, kann die das Schneidorgan tragende Nabe zusammen mit dem Vorspannelement in eine Nichtbetriebsstellung überführt werden, in der eine ungestörte Relativbewegung zwischen der Antriebswelle und dem Schneidorgan erfolgen kann. Vorteilhafterweise befindet sich die das Schneidorgan tragende Nabe dann in einer Position, welche oberhalb von der Betriebsstellung gelegen ist. In einer einfachen Ausführungsform kann das Vorspannelement als eine ringförmige Befestigungsmutter ausgeführt sein, so dass dann unmittelbar nach dem Abschervorgang des Abscherelementes sich die ringförmige Befestigungsmutter zusammen mit der das Schneidorgan tragenden Nabe entlang des Gewindeganges der Antriebswelle nach oben in die Nichtbetriebsstellung bewegen kann. Das bedeutet, dass die Antriebswelle im oberen Bereich so gestaltet ist, dass die das Schneidorgan tragende Nabe in der Nichtbetriebsstellung mit Spiel relativ zur Antriebswelle rotieren kann.

In einer konstruktiv einfachen und somit kostengünstigen Ausführungsform kann das Abscherelement als Abscherstift ausgebildet sein, wobei der Abscherstift im montierten Zustand in eine langlochähnliche Aussparung der das Schneidorgan tragenden Nabe eingreift. Der Sitz des Abscherstiftes an der das Schneidorgan tragenden Nabe ist deshalb als langlochähnliche Aussparung ausgeführt, damit durch das als ringförmige Befestigungsmutter gestaltete Vorspannelement beim Aufbringen der Vorspannung keine in Achsrichtung der Antriebswelle gerichtete Beanspruchung auf den Abscherstift aufgebracht wird.

Weitere vorteilhafte Ausgestaltungen der Erfindung ergeben sich aus der Positionierung des Abscherstiftes in Bezug zu der das Schneidorgan tragenden Nabe. Im montierten Zustand wird deutlich, dass der Abscherstift zweiteilig ausgeführt ist und so montiert ist, dass zwischen den beiden Teilen ein Spalt frei bleibt. Diese Montageart ist deshalb gewählt worden, damit im Falle des Abscherens der beiden Teile des Abscherstiftes die noch in der Bohrung der Antriebswelle verbleibenden Reststücke beim Abscheren noch weiter nach innen zurückweichen können, wenn Bruchkanten an den Reststücken über den Durchmesser der Antriebswelle im Bereich der Abscherstelle überstehen. Hierdurch werden Störungen der freien Relativbewegung der das Schneidorgan tragenden Nabe nach dem Abscheren des Abscherstiftes wirksam vermieden. Weiterhin ist die Abscherstelle bzw. der Sitz für den Abscherstift so gewählt, dass nach der Montage des Schneidorgans auf die Nabe ein radiales, durch Zentrifugalkräfte eingeleitetes Austreten des Abscherstiftes verhindert wird.

Zur Anpassung an unterschiedliche Einsatzverhältnisse ist es erfindungsgemäß vorgesehen, dass die Größe des Ansprechmomentes der Überlastsicherung verändert werden kann. Einerseits ist es natürlich denkbar, dass das Abschermoment des Abscherstiftes durch die geschickte Auswahl von Durchmesser und/oder Wandstärke zu beeinflussen ist. Andererseits kann durch das Aufbringen von unterschiedlichen Vorspannungen ein veränderbares Reibmoment zwischen der Antriebswelle und der das Schneidorgan tragenden Nabe eingestellt werden.

Weiterbildungen der Erfindung können entgegen der vorstehend beschriebenen Ausführungsform auch davon ausgehen, dass die Anordnung zur Herstellung einer reibschlüssigen Verbindung zwischen der Antriebswelle und der Nabe auch so ausgeführt ist, dass die das Schneidorgan tragende Nabe ihrerseits beispielsweise mit einem Gewinde versehen ist und so dass die notwendige Vorspannkraft ebenfalls von der Schneidorgan tragenden Nabe aufgebracht werden kann.

Die Erfindung wird nun anhand eines Ausführungsbeispiel näher erläutert. In der Zeichnung zeigt:
- Fig.1:: eine Ansicht von oben auf eine an einen landwirtschaftlichen Schlepper angebaute, erfindungsgemäße Mähmaschine;
- Fig.2:: eine Schnittdarstellung gemäß Schnitt II - II in Fig.1;
- Fig.3:: eine vergrößerte, nicht geschnittene Detaildarstellung der Einzelheit X nach Fig.2 in einer gegenüber Fig.2 um 90° gedrehten Position, wobei jedoch aus Gründen einer verbesserten Übersichtlichkeit eine Abdeckung weggelassen wurde;
- Fig.4:: eine Ansicht von oben auf ein Schneidorgan nach Fig.2, wobei jedoch aus Gründen einer verbesserten Übersichtlichkeit eine Abdeckung weggelassen wurde;

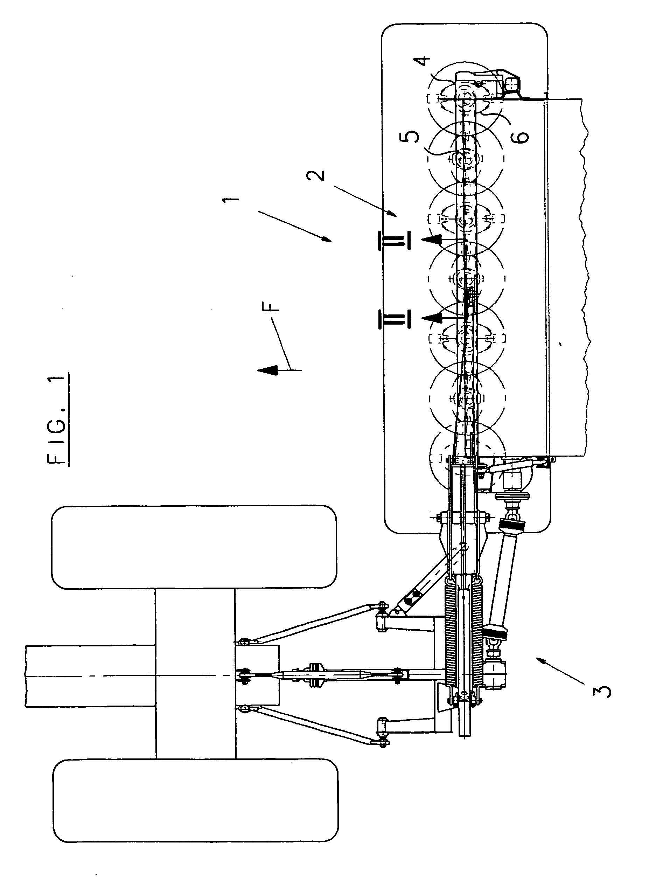

Eine erfindungsgemäße Mähmaschine 1, insbesondere ein Scheibenmähwerk zum Ernten von halmförmigen Erntegütern, wie Gras oder dgl. ist in Fig.1 dargestellt und besteht im wesentlichen aus einer Mäheinrichtung 2, die über eine Tragbaugruppe 3 im Heckanbau an einen landwirtschaftlichen Schlepper oder dgl. Zug- und Antriebsmaschine angehängt werden kann und in Fahrt- und Arbeitsrichtung F im Mähbetrieb über eine Feld- oder Wiesenfläche bewegt wird. Die Mäheinrichtung 2 ist dabei aus einem Mähholm 4 gebildet, auf dem eine Anzahl von um eine etwa vertikale Achse 5 rotierende Schneidorgane 6 angeordnet sind, wobei die Schneidorgane 6 ihrerseits mit zumindest zwei, als Mähklingen ausgeführte Mähwerkzeuge aufweisen, die durch die Fliehkraft nach außen stehen und eine Schneidwirkung erzeugen. Der Gegenstand der Erfindung beschränkt sich dabei keineswegs nur auf das in Fig.1 dargestellte Ausführungsbeispiel. Vielmehr ist es ebenso möglich der Erfindung eine Mähmaschine mit einer anderen Bauart zugrunde zu legen, beispielsweise eine Mähmaschine in der gezogenen Bauart oder Mäheinrichtungen, die an selbstfahrenden Arbeitsmaschinen zum Einsatz kommen.

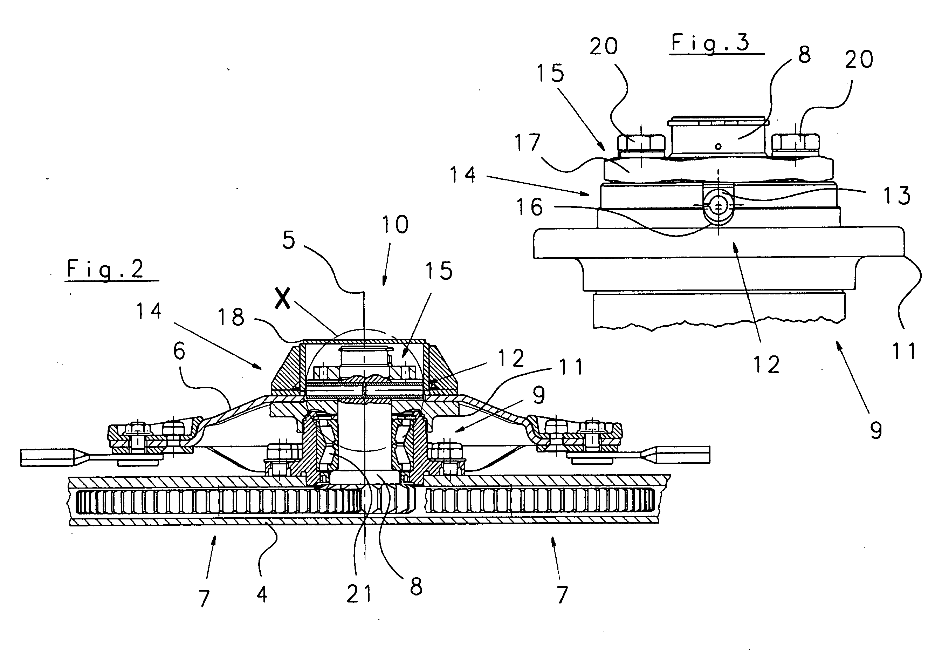

Die in Fig. 2 wiedergegebene Schnittdarstellung zeigt den Aufbau und die Anordnung eines Schneidorgans 6 oberhalb des Mähholmes 4. Ausgehend von Antriebsorganen 7 in dem Mähholm 4 erstreckt sich in etwa vertikaler Richtung eine Antriebswelle 8, welche an ihrem unteren Ende ein mit einem als Zahnrad ausgebildeten Antriebsorgan 7 in Eingriff stehendes Ritzel aufweist und dessen oberes Ende an der Oberseite des Mähholmes 4 über eine Lagerung 9 am Mähholm 4 gehaltert ist. Oberhalb der Lagerung 9 schließt sich eine Überlastsicherung 10 an, deren Nabe 11 gleichermaßen auch der Aufnahme eines Schneidorgans 6 dient. Erfindungsgemäß sind zur Verbindung der das Schneidorgan 6 tragenden Nabe 11 mit der Antriebswelle 8 zwei Bauteile vorgesehen, welche jedes für sich ein Teilmerkmal der Überlastsicherung 10 ergibt. Zum Aufbau eines Abschermomentes wird die Nabe 11 über ein Abscherelement 12 mit der Antriebswelle 8 verbunden, wobei hier als Abscherelement 12 ein Abscherstift 13 Anwendung findet. Zum Aufbau eines Reibmomentes zwischen der Antriebswelle 8 und der das Schneidorgan 6 tragenden Nabe 11 ist nach der Erfindung der Nabe 11 eine als Vorspannelement 15 ausgeführte Anordnung 14 zur Herstellung einer reibschlüssigen Verbindung zugeordnet, so dass durch die von dem Vorspannelement 15 auf die Nabe 11 einwirkende Vorspannung sich über ein Wälzlager 21 bis auf die Antriebswelle erstreckt und dadurch ein Reibmoment erzeugt. Im Falle einer Überlast ist also das Abschermoment und das Reibmoment zu überwinden, bevor die Verbindung zwischen der Antriebswelle 8 und der das Schneidorgan 6 tragenden Nabe 11 unterbrochen ist.

Wie weiterhin der Fig. 2 und 3 zu entnehmen ist, besteht der Abscherstift 13 aus zwei Teilen, welche die Antriebswelle 8 durchsetzen und in langlochähnlichen Aussparungen 16 der Nabe aufgenommen sind. Wie insbesondere in der Fig.3 veranschaulicht, wird durch das Aufbringen der Vorspannung auch keinerlei in Richtung der vertikalen Achse 5 der Antriebswelle 8 gerichtete Beanspruchung auf den Abscherstift 13 eingeleitet, so dass auf den Abscherstift 13 nur eine Abscherbeanspruchung einwirkt. Die Montageart des Abscherstiftes 13, bei der zwischen den beiden Teilen ein Spalt frei bleibt, bietet den Vorteil, dass im Überlastfall der innerhalb der Antriebswelle 8 verbleibende Rest des Abscherstiftes 13 noch weiter nach innen verschiebbar ist, wenn Bruchkanten gegenüber dem Durchmesser der Antriebswelle 8 im Abscherbereich vorstehen und eine frei Relativbewegung zwischen der Antriebswelle 8 und der das Schneidorgan 6 tragenden Nabe 11 behindern.

Oberhalb des als ringförmigen Befestigungsmutter 17 ausgebildeten Vorspannelementes 15 weist die Antriebswelle 8 ein im Durchmesser gegenüber dem Gewindeabschnitt für die ringförmige Befestigungsmutter 17 verkleinert ausgebildeten glatten Zapfenabschnitt auf. Im Falle einer Überlast wird die das Schneidorgan 6 tragende Nabe 11 zusammen mit dem als ringförmige Befestigungsmutter 17 ausgeführten Vorspannelement 15 aus der in Fig. 2 und 3 dargestellten Betriebsstellung in eine Nichtbetriebsstellung überführt, die oberhalb von der Betriebsstellung liegt und in der dann der obere glatte Zapfenabschnitt der Antriebswelle 8 von der ringförmigen Befestigungsmutter 17 umgeben ist. Diese Maßnahme dient dazu, die das Schneidorgan 6 tragende Nabe 11 und die mit dieser drehfest verbundenen ringförmigen Befestigungsmutter 17 in einen Bereich zu überführen, in dem eine störungsfreie Relativbewegung zwischen der Nabe 11 bzw. der Befestigungsmutter 17 und der Antriebswelle 8 ermöglicht ist und dazu ausreichend Spiel zwischen diesen Teilen vorhanden ist. Zur Sicherung des Schneidorgans 6 im Überlastfall ist die Antriebswelle 8 an ihrem oberen Ende mit einem Sicherungsring versehen, der ein Wegfliegen des Schneidorgans 6 unterbindet.

Zum Schutz gegen Verschmutzung ist die Überlastsicherung 10 oberhalb des Schneidorgans 6 mit einer Abdeckung 18 versehen, wie dies deutlich aus der Fig. 2 zu entnehmen ist.

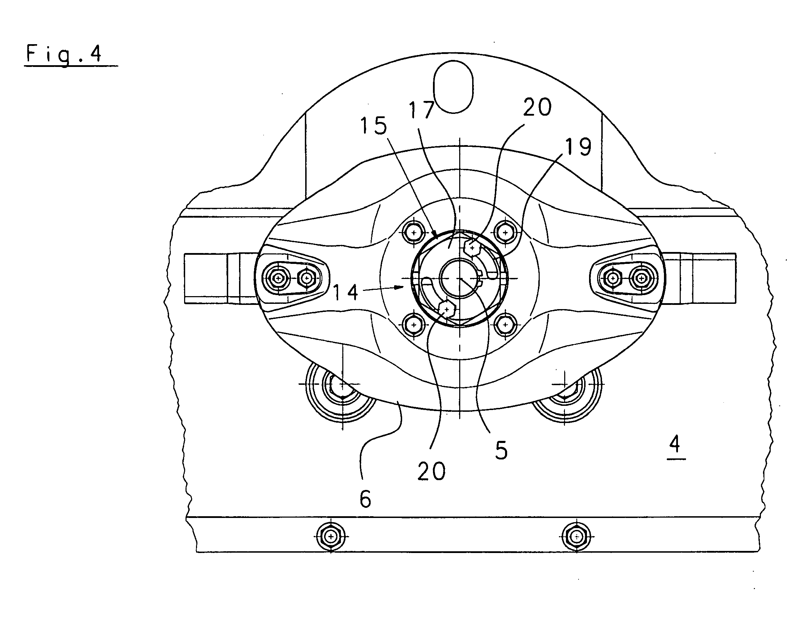

Die Herstellung einer verdrehfesten Verbindung zwischen der das Schneidorgan 6 tragenden Nabe 11 und der ringförmigen Befestigungsmutter 17 ist näher in Fig. 4 veranschaulicht. Die ringförmige Befestigungsmutter 17 weist dazu an ihrer Stirnseite zwei kreisbogenförmige Langlöcher 19 auf, deren Bogenlänge so ausgebildet ist, dass sich unabhängig von der jeweiligen Stellung der Befestigungsmutter 17 zur Nabe 11 stets eine Gewindebohrung innerhalb der Langlöcher 19 befindet. Dadurch ist es unter allen gewünschten Vorspannverhältnissen möglich, eine verdrehfeste Verbindung zwischen der Nabe 11 und der Befestigungsmutter 17 durch Einschrauben von Befestigungsschrauben 20 in die Gewindebohrungen der Nabe 11 zu erzeugen.

## Patentansprüche

1. Mähmaschine mit einer Anzahl auf einem Mähholm (4) angebrachten, um eine in etwa vertikale Achse (5) rotierenden Schneidorganen (6), welche an ihrem Umfang zumindest zwei drehbeweglich angeordnete, infolge der Fliehkraft radial nach außen stehende und eine Schneidwirkung erzeugende Schneidwerkzeuge aufweisen, mit die rotierenden Schneidorgane (6) von unten antreibenden, im Mähholm (4) untergebrachten und Zahnräder umfassenden Antriebsorganen, wobei jedes von unten rotierend angetriebene Schneidorgan (6) über eine um die entsprechende vertikale Achse (5) rotierende und in einer mit dem Mähholm (4) verbundenen Lagerung (9) geführten Antriebswelle (8) mit Zahnräder umfassenden Antriebsorganen (7) in fester Antriebsverbindung steht, mit einer Überlastsicherung, über die jede einzelne Antriebswelle (8) und das zugehörige, rotierende Schneidorgan (6) in einer ein Drehmoment übertragenden Weise verbunden ist, wobei die Überlastsicherung (10) von einer das Schneidorgan (6) tragenden Nabe (11) gebildet ist, welche mit einem Abscherelement (12) zur Erzeugung einer formschlüssigen Verbindung zwischen der Antriebswelle (8) und der Nabe (11) und mit einer Anordnung (14) zur Herstellung einer reibschlüssigen Verbindung zwischen der Antriebswelle (8) und der Nabe (11) zusammenwirkend ausgebildet ist und wobei der Nabe (11) eine als Vorspannelement (15) ausgeführte Anordnung (14) zugeordnet ist, welche derartig auf die das Schneidorgan (6) tragende Nabe (11) einwirkt, dass zwischen der Nabe (11) und der Antriebswelle (8) eine reibschlüssige Verbindung wirksam wird und dass das Vorspannelement (15) zusammen mit der das Schneidorgan (6) tragenden Nabe (11) im Falle einer Überlast in eine Nichtbetriebsstellung überführbar ist, die sich oberhalb der Betriebstellung befindet.

2. Mähmaschine nach Anspruch 1, **dadurch gekennzeichnet, dass** das Vorspannelement (15) auf die das Schneidorgan (6) tragende Nabe (11) eine Vorspannkraft ausübt.

3. Mähmaschine nach einem der Ansprüche 1 oder 2, **dadurch gekennzeichnet, dass** das Vorspannelement (15) und die das Schneidorgan (6) tragende Nabe (11) in der Betriebsstellung verdrehfest miteinander verbunden sind.

4. Mähmaschine nach einem der Ansprüche 1 bis 3, **dadurch gekennzeichnet, dass** das Vorspannelement (15) zusammen mit der das Schneidorgan (6) tragenden Nabe (11) im Falle einer Überlast mit Spiel relativ zur Antriebswelle (8) rotieren kann.

5. Mähmaschine nach Anspruch 1, **dadurch gekennzeichnet, dass** das Abscherelement (12) als Abscherstift (13) ausgebildet ist, der in einer langlochähnlichen Aussparung (16) der Nabe (11) eingreift.

6. Mähmaschine nach Anspruch 5, **dadurch gekennzeichnet, dass** der Abscherstift (13) aus zwei Teilen besteht, wobei sich die beiden Teile von der radial äußeren Peripherie der Nabe (11) bis zur Mitte der Antriebswelle (8) erstrecken und zwischen den beiden Teilen ein Spalt frei bleibt.

7. Mähmaschine nach Anspruch 5 und 6, **dadurch gekennzeichnet, dass** der Abscherstift (13) ein Hohlspannstift ist.

8. Mähmaschine nach einem der Ansprüche 5 bis 7, **dadurch gekennzeichnet, dass** die beiden Teile des Abscherstiftes (13) im montierten Zustand in ihrer Lage derartig festgelegt sind, dass durch das Aufsetzen des Schneidorgans (6) auf die Nabe (11) das radiale Austreten des Abscherstiftes (13) verhindert wird.

9. Mähmaschine nach Anspruch 1, **dadurch gekennzeichnet, dass** die Größe des Ansprechdrehmomentes der Überlastsicherung (10) veränderbar ist.

10. Mähmaschine nach Anspruch 9, **dadurch gekennzeichnet, dass** die Größe des Ansprechmomentes der Überlastsicherung durch die Auswahl des Durchmessers und/oder der Wandstärke des Abscherstiftes (13) variierbar ist.

11. Mähmaschine nach Anspruch 9 und 10, **dadurch gekennzeichnet, dass** die Größe des Ansprechmomentes der Überlastsicherung (10) durch eine Veränderung der Vorspannkraft verstellbar ist, welche das Vorspannelement (15) auf die Nabe (11) ausübt.

12. Mähmaschine nach einem der Ansprüche 1 bis 11, **dadurch gekennzeichnet, dass** das Vorspannelement (15) als ringförmige Befestigungsmutter (17) ausgeführt ist.

13. Mähmaschine nach Anspruch 12, **dadurch gekennzeichnet, dass** die ringförmige Befestigungsmutter (17) an ihrer Stirnseite kreisbogenförmige Langlöcher (19) zur Herstellung einer drehfesten Verbindung mit der Nabe (11) aufweist.

14. Mähmaschine nach Anspruch 12 und 13, **dadurch gekennzeichnet, dass** zur Herstellung der drehfesten Verbindung zwischen der ringförmigen Befestigungsmutter (17) und der Nabe (11) Schrauben (20) vorgesehen sind.

## Claims

1. Mower having a plurality of cutting members (6) which are mounted on a mower main arm (4), which rotate about a vertical axis (5) and which have at their circumference at least two cutting tools which are arranged to be movable in rotation and which project outwards and produce a cutting action due to centrifugal force, having drive members which drive the rotating cutting members (6) from below, which are housed in the mower main arm (4) and which comprise gears, each cutting member (6) which is driven in rotation from below having a fixed driving connection to drive members (7) comprising gears via a drive shaft (8) which rotates about the appropriate vertical axis (5) and which is carried in a mounting (9) connected to the mower main arm (4), and having an anti-overload safety mechanism by which each individual drive shaft (8) and the associated rotating cutting member (6) are connected in such a way that torque is transmitted, the anti-overload safety mechanism (10) being formed by a hub (11) which carries the cutting member (6), which hub (11) is designed to cooperate with a shearing member (12) to produce a positively interengaged connection between the drive shaft (8) and the hub (11) and with an arrangement (14) for making a frictional connection between the drive shaft (8) and the hub (11), and the hub (11) having associated with it an arrangement (14) which is designed as a preloading member (15) and which acts on the hub (11) carrying the cutting member (6) in such a way that a frictional connection comes into action between the hub (11) and the drive shaft (8) and that, in the event of an overload, the preloading member (15), together with the hub (11) carrying the cutting member (6), can be transferred to a non-operating position which is situated above the operating position.

2. Mower according to claim 1, **characterised in that** the preloading member (15) exerts a preloading force on the hub (11) carrying the cutting member (6).

3. Mower according to either of claims 1 and 2, **characterised in that**, in the operating position, the preloading member (15) and the hub (11) carrying the cutting member (6) are connected together to be solid in rotation with one another.

4. Mower according to one of claims 1 to 3, **characterised in that**, in the event of an overload, the preloading member (15), together with the hub (11) carrying the cutting member (6), is able to rotate relative to the drive shaft (8) with a clearance.

5. Mower according to claim 1, **characterised in that** the shearing member (12) takes the form of a shear pin (13) which engages in a recess (16) in the hub (11) similar to a slotted hole.

6. Mower according to claim 5, **characterised in that** the shear pin (13) is in two parts, the two parts extending from the radially outer periphery of the hub (11) to the centre of the drive shaft (8) and a gap being left free between the two parts.

7. Mower according to claims 5 and 6, **characterised in that** the shear pin (13) is a spring tension pin.

8. Mower according to one of claims 5 to 7, **characterised in that**, in the fitted state, the two parts of the shear pin (13) are fixed in position in such a way that the fitting of the cutting member (6) onto the hub (11) prevents the shear pin (13) from escaping radially.

9. Mower according to claim 1, **characterised in that** the level of torque at which the anti-overload safety mechanism (10) responds can be varied.

10. Mower according to claim 9, **characterised in that** the level of torque at which the anti-overload safety mechanism responds can be varied by selecting the diameter and/or wall thickness of the shear pin (13).

11. Mower according to claims 9 and 10, **characterised in that** the level of torque at which the anti-overload safety mechanism (10) responds can be adjusted by varying the preloading force which the preloading member (15) exerts on the hub (11).

12. Mower according to one of claims 1 to 11, **characterised in that** the preloading member (15) takes the form of an annular fastening nut (17).

13. Mower according to claim 12, **characterised in that** the annular fastening nut (17) has, in its face, arcuate slotted holes (19) for making a connection to the hub (11) to be solid in rotation therewith.

14. Mower according to claims 12 and 13, **characterised in that** screws or bolts (20) are provided to make the connection between the annular fastening nut (17) and the hub (11) by which they are solid in rotation with one another.

## Revendications

1. Faucheuse comportant un certain nombre d'organes de coupe (6), rotatifs autour d'un axe sensiblement vertical (5), installés sur une barre de fauche (4), ces organes de coupe ayant à leur périphérie au moins deux outils de coupe montés mobiles en rotation et venant en saillie radialement vers l'extérieur sous l'effet de la force centrifuge et générant un effet de coupe,
comprenant :
- des organes d'entraînement, entraînant les organes de coupe rotatifs (6), par en dessous, ces organes étant logés dans la barre de fauche (4) et comportant des roues dentées,
- chaque organe de coupe (6) entraîné en rotation par en dessous, étant en liaison d'entraînement ferme avec un arbre d'entraînement (8) tournant autour de l'axe vertical (5) et guidé dans un palier (9) de la barre de fauche (4), cet arbre d'entraînement (8) ayant des organes d'entraînement (7) avec des roues dentées,
- une protection de surcharge reliant chaque arbre d'entraînement (8), séparément et l'organe de coupe rotatif (6) correspondant de manière à transmettre un couple,
- la protection de surcharge (10) étant formée par un moyeu (11) portant l'organe de coupe (6), ce moyeu (11) étant formé d'un élément de cisaillement (12) pour réaliser une liaison par la forme entre l'arbre d'entraînement (8) et le moyeu (11) cogérant avec un dispositif (14) pour réaliser une liaison par friction entre l'arbre d'entraînement (8) et le moyeu (11), et
- le moyeu (11) comportant un dispositif (14) réalisé sous la forme d'un élément de précontrainte (15) qui agit sur le moyeu (11) portant l'organe de coupe (6) de façon à réaliser une liaison par la friction entre le moyeu (11) et l'arbre d'entraînement (8), et
- l'élément de précontrainte (15) avec le moyeu (11) portant l'organe de coupe (6), passe en position de non-fonctionnementt en cas de surcharge, position qui se trouve au-dessus de la position de fonctionnement.

2. Faucheuse selon la revendication 1,
**caractérisée en ce que**
l'élément de précontrainte (15) exerce une force de précontrainte sur le moyeu (11) portant l'organe de coupe (6).

3. Faucheuse selon la revendication 1 ou 2,
**caractérisée en ce que**
en position de fonctionnement l'élément de précontrainte (15) et le moyeu (11) qui porte l'organe de coupe (6), sont reliés solidairement en rotation.

4. Faucheuse selon les revendications 1 à 3,
**caractérisée en ce que**
en cas de surcharge l'élément de précontrainte (15) avec le moyeu (11) portant l'organe de coupe (6), peut tourner avec du jeu par rapport à l'arbre d'entraînement (8).

5. Faucheuse selon la revendication 1,
**caractérisée en ce que**
l'élément de cisaillement (12) est réalisé sous la forme d'une broche de cisaillement (13) pénétrant dans une cavité (16) en forme de trou allongé du moyeu (11).

6. Faucheuse selon la revendication 5,
**caractérisée en ce que**
la broche de cisaillement (13) se compose de deux parties, les deux parties s'étendant radialement de la périphérie extérieure du moyeu (11) jusqu'au milieu de l'arbre d'entraînement (8), laissant un intervalle libre entre les deux parties.

7. Faucheuse selon les revendications 5 et 6,
**caractérisée en ce que**
la broche de cisaillement (13) est une goupille creuse de serrage.

8. Faucheuse selon les revendications 5 à 7,
**caractérisée en ce qu'**
en position assemblée, les deux parties de la broche de cisaillement (13) sont fixées dans leur position de façon que la mise en place de l'organe de coupe (6) sur le moyeu (11) interdise la sortie radiale de la broche de cisaillement (13).

9. Faucheuse selon la revendication 1,
**caractérisée en ce que**
l'amplitude du couple de déclenchement de la protection de surcharge (10) est variable.

10. Faucheuse selon la revendication 9,
**caractérisée en ce que**
l'amplitude du couple de mise en oeuvre de la protection de surcharge est changée par la sélection du diamètre et/ou de l'épaisseur de la paroi de la broche de cisaillement (13).

11. Faucheuse selon les revendications 9 et 10,
**caractérisée en ce que**
l'amplitude du couple sollicitant la protection de surcharge (10) est réglable par une modification de la force de précontrainte exercée par l'élément de précontrainte (15) sur le moyeu (11).

12. Faucheuse selon les revendications 1 à 11,
**caractérisée en ce que**
l'élément de précontrainte (15) est réalisé sous la forme d'un écrou annulaire de fixation (17).

13. Faucheuse selon la revendication 12,
**caractérisée en ce que**
l'écrou de fixation annulaire (17) comporte dans sa face frontale, des trous oblongs (19) en arc de cercle pour réaliser une liaison solidaire en rotation avec le moyeu (11).

14. Faucheuse selon les revendications 12 et 13,
**caractérisée par**
des vis (20) pour réaliser une liaison solidaire en rotation entre l'écrou de fixation (17) de forme annulaire et le moyeu (11).
